# EUROPEAN PATENT APPLICATION

(11) **EP 1 792 788 A1**
(43) Date of publication of application: **06.06.2007**
(21) Application number: 06077083.1
(22) Date of filing: 23.11.2006
(51) Int. Cl.: B60R 21/015

(54) **Scanned laser-line sensing apparatus for a vehicle occupant**

(30) Priority: 05.12.2005 US 293957
(71) Applicant: Delphi Technologies, Inc., Troy, Michigan 48007 (US)
(72) Inventor: Griffin, Dennis P., Noblesville, IN 46060 (US); Fultz, William W., Carmel, IN 46033 (US)
(74) Representative: Denton, Michael John

(57) **Abstract**

An occupant sensing apparatus for a vehicle passenger compartment (10) includes a laser line scanning unit (12). A line of IR light (44) produced by a laser line generator (30) is mechanically scanned over a region including a vehicle seat (16) and a restraint deployment location (20). The reflected IR light is received by a solid-state imager (32), and a digital signal processor (34) constructs a 3-D profile of the scanned region (66). The 3-D profile is used to detect and characterize a seat occupant or other object in the viewing region (72) and to determine the proximity of an object to an inflatable restraint (20).

## Description

### TECHNICAL FIELD

The present invention relates to an optical sensing apparatus for detecting and characterizing the occupant of a vehicle seat.

### BACKGROUND OF THE INVENTION

Motor vehicles equipped with selectively deployable restraints such as air bags often include a sensing apparatus for detecting the presence of an occupant, at least in the front passenger seat, and for characterizing a detected occupant (by type and orientation, for example) for purposes of determining whether and/or how forcefully the restraints should be deployed in the event of a sufficiently severe crash. Various optical sensing approaches have been proposed, particularly for the purpose of determining if an occupant is too close to the point of deployment of the restraint. See, for example, the U.S. Patent Nos. 6,298,311 and 6,766,271 to Griffin et al., where an array of light-emitting-diodes (LEDs) are selectively activated to emit beams of infrared (IR) light in a predefined pattern, and the reflected IR light is detected by a photosensitive receiver. One particular advantage of such a system is that the proximity of an occupant or other object in the path of one or more light beams can be easily and reliably determined by triangulation, for example. However, the amount of information that can be gleaned about the occupant is limited by the number of IR light beams, and can be insufficient to accurately characterize an occupant or to reliably distinguish between an occupant's arm and head, for example. Accordingly, what is needed is a more comprehensive and yet cost-effective optical sensing apparatus for detecting and characterizing a vehicle occupant.

### SUMMARY OF THE INVENTION

The present invention provides an improved occupant sensing apparatus including a laser-line scanner. A line of IR light produced by a laser line generator is mechanically scanned over a region including a vehicle seat and a restraint deployment location. The reflected IR light is received by a solid-state imager, and a digital signal processor constructs a 3-D profile of the scanned region. The 3-D profile is used to detect and characterize a seat occupant or other object in the viewing region and to determine the proximity of an object to an inflatable restraint.

### BRIEF DESCRIPTION OF THE DRAWINGS

FIG. 1 is a diagram of a vehicle passenger compartment equipped with an occupant sensing apparatus according to this invention;
FIGS. 2A-2C depict a mechanization of the occupant sensing apparatus of FIG. 1. FIG. 2A depicts a top view of a housing of the sensing apparatus; FIG. 2B depicts the sensing apparatus with the housing cover removed; and FIG. 2C is a cross-sectional view of the sensing apparatus, taken along lines II-II of FIG. 2B;
FIG. 3 is a flow diagram representative of an overall software routine executed by a digital signal processor of the sensing apparatus according to this invention;
FIG. 4 is a flow diagram of a software routine called by the flow diagram of FIG. 3 to acquire imager target data; and
FIG. 5 is a flow diagram of a software routine called by the flow diagram of FIG. 3 to locate, identify and calculate target vectors.

### DESCRIPTION OF THE PREFERRED EMBODIMENT

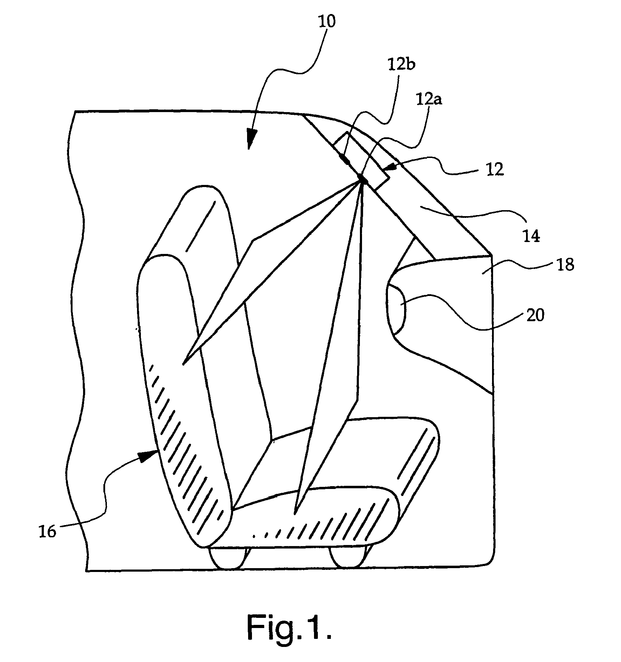

Referring to FIG. 1, the reference numeral 10 generally designates the passenger compartment of a vehicle equipped with a laser scanning unit 12 according to this invention. In the illustrated embodiment, the scanning unit 12 is mounted on the A-pillar 14 of the compartment 10, although other locations within the compartment 10 may be equally suitable. The scanning unit 12 generates an infrared (IR) laser line and emits it through a first IR-pass lens 12a. As illustrated in FIG. 1, scanning unit 12 physically scans the infrared (IR) laser line over a field-of-view that encompasses the passenger seat 16 and an instrument panel 18 from which a supplemental restraint 20 such as an air bag is deployed. The reflected laser light is received by the scanning unit 12 via a second IR-pass lens 12b and used to construct a 3-D profile of the scanned region, from which a seat occupant and other objects in the region are reliably detected and characterized, as explained below.

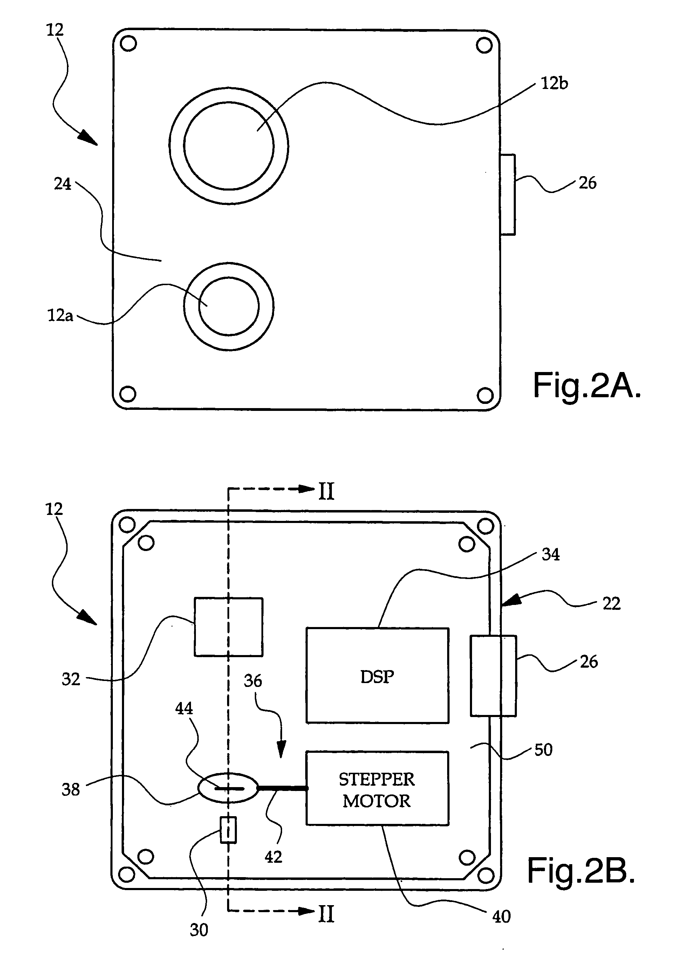

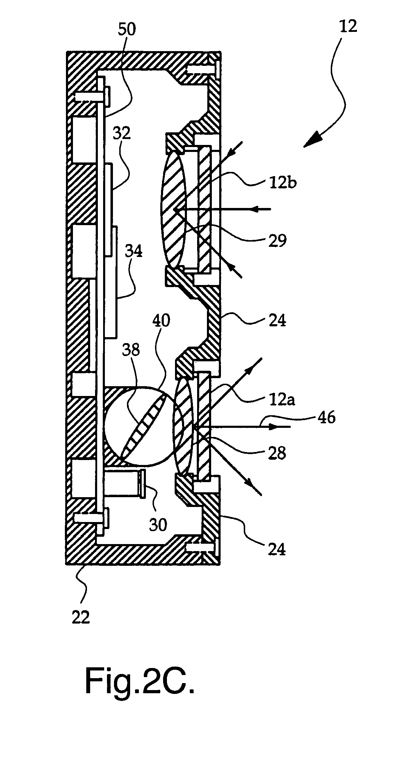

Referring to FIGS. 2A, 2B and 2C, the scanning unit 12 includes a housing base and cover 22, 24 that encase its components and a connector 26 for receiving power and signal/data cables. As shown in FIG. 2C, the IR-pass lenses 12a, 12b are mounted in the housing cover 24, along with respective focusing lenses 28 and 29. The housing base 22 supports an IR laser line generator 30, a solid-state imager 32 such as a CMOS or CCD camera chip, a digital signal processor (DSP) 34 and a scanning apparatus 36. The scanning apparatus 36 includes a mirror 38 disposed inboard of the lenses 12a and 28, and a stepper motor 40 having an armature shaft 42 secured to the mirror 38. As best seen in FIG. 2C, the laser line generator 30, imager 32, DSP 34 and stepper motor 40 are mounted on a printed circuit board 50 retained in the housing base 22.

The laser line generator 30 is positioned to emit a line of coherent IR light that impinges on mirror 38, as designated by the reference numeral 44 in FIG. 2B. The mirror 38 directs the impinging IR light outward through the focusing lens 28 and IR-pass lens 12a as indicated by the reference numeral 46 in FIG. 2C. Similarly, the imager 32 is disposed inboard of the IR-pass lens 12b and focusing lens 29 so that light emitted from scanning unit 12 and reflected from an object in the viewing field passes through the lenses 12b and 29, and is focused on the active area of imager 32. In operation, DSP 34 activates stepper motor 40 to rotate the mirror 38 in stepwise fashion over a specified range of movement to scan the line of IR light 44 over the viewing area as depicted in FIG. 1. At each position of the mirror 38, DSP 34 receives video data from imager 32 detailing the location and extent of the reflected and received IR light. From this data, DSP 34 identifies any objects in the viewing area and forms target vectors containing object position and range data. The range information is determined using the relationship of similar triangles defined in part by the distance between the imager 32 and the mirror 38. The target vectors are accumulated in a target map to form a 3-D profile of objects in the scanned region, and the information stored in the target map is analyzed to determine the status (empty vs. occupied) of the seat 16 and the classification of a detected occupant.

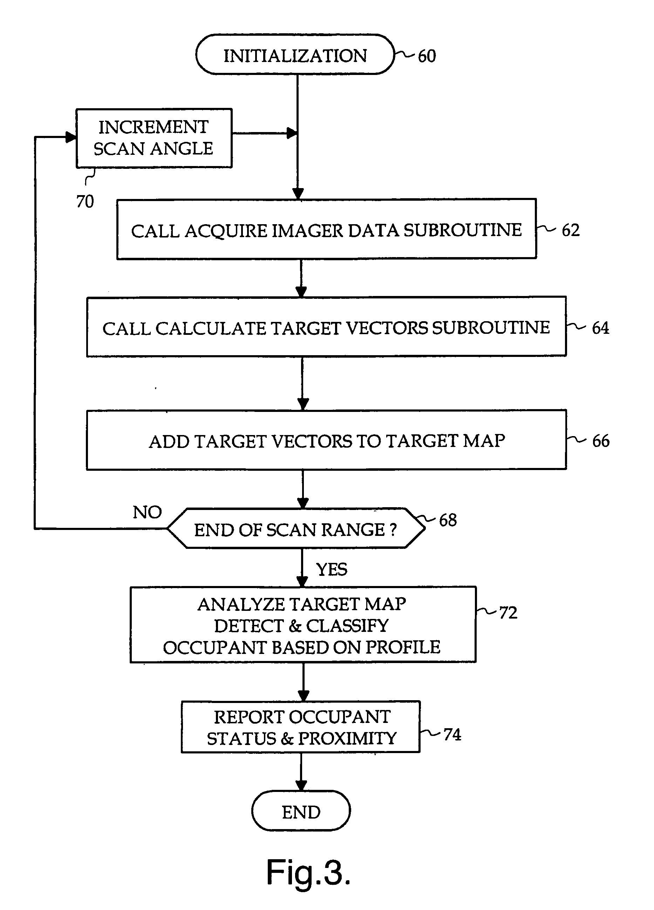

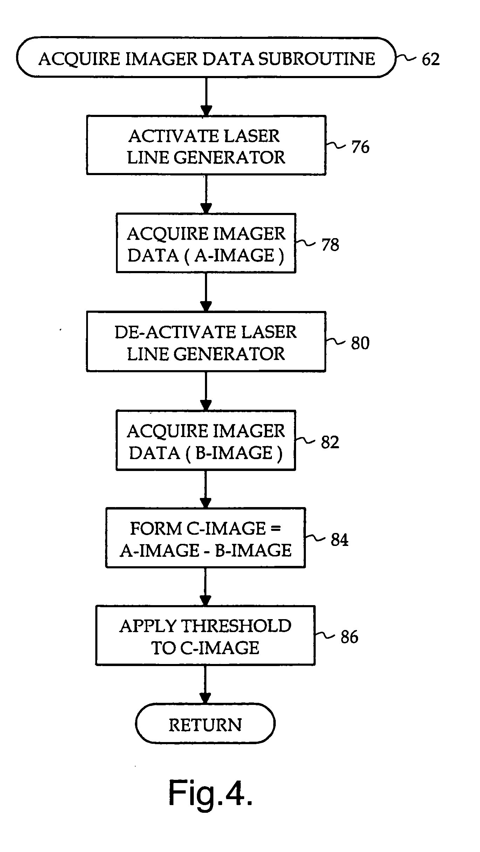

FIGS. 3-5 depict flow diagrams that are representative of a software routine resident within DSP 34 and selectively executed by DSP 34 for carrying out the above-described and other related functions. The flow diagram of FIG. 3 depicts a main loop of the routine, whereas the flow diagrams of FIGS. 4-5 detail subroutines called by the main loop.

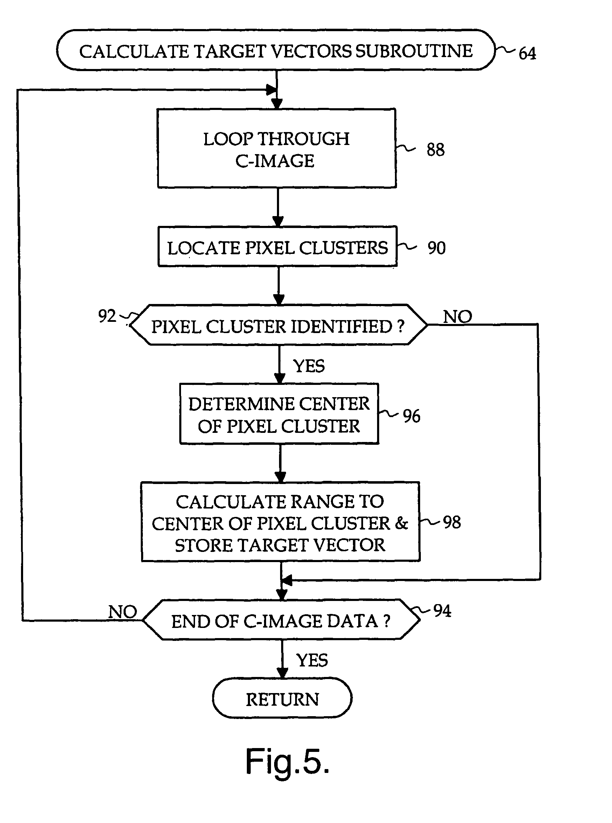

Referring to the main loop flow diagram of FIG. 3, the block 60 designates initialization instructions executed each time an occupant scan is requested. These instructions may include, for example, diagnostic routines and a routine for rotating the stepper motor armature shaft 42 to a specified starting position or scan angle. Following initialization, the blocks 62-66 are executed to acquire occupant profile data at the current scan angle. The block 62 calls a subroutine (detailed in FIG. 4) for acquiring video data from imager 32. The block 64 calls a subroutine (detailed in FIG. 5) for locating, identifying and calculating target vectors based on the acquired data, and the block 65 adds the target vectors to a target map. The blocks 68 and 70 are then executed to activate the stepper motor 40 for incrementally rotating mirror 38, after which the blocks 62-66 are re-executed for the new scan angle. As indicated by block 68, this process of incrementing the scan angle and acquiring target data is repeated until the full scanning range of the scanning unit 12 has been achieved.

When an entire scan of the viewing area has been completed, DSP 34 executes block 72 to detect and classify seat occupants based on information stored in the target map. Determining whether the seat 16 is occupied or unoccupied can be facilitated by scanning an unoccupied seat and storing the corresponding target map as a reference. In a similar manner, reference target maps for various types of occupants and infant/child seats may be stored to facilitate classification of a detected occupant. Also, the proximity of a detected occupant relative to the point of deployment of restraint 20 is determined from the target map. Ideally, the profile information will be sufficient to reliably classify an occupant, and to distinguish an occupant's head or torso from say, a newspaper or other object being held by the occupant. But in cases where an object in proximity to the restraint 20 cannot be reliably classified, DSP 34 can be configured to assume that the object is an occupant. Once the seat occupancy status (empty vs. not-empty, for example) and occupant classification have been determined, the block 74 is executed to communicate the determined information, including the proximity of a detected (or assumed) occupant to the restraint 20. The classification and proximity data is communicated primarily to an electronic module that controls deployment of the restraint 20, and can be used to determine whether deployment should be allowed or inhibited, or how much deployment force should be used.

Referring to FIG. 4, the subroutine for acquiring imager data begins by activating the laser line generator 30 to actively illuminate the viewing area at the current scan angle (block 76) and acquiring video data (A-IMAGE) developed by imager 32 during the active illumination (block 78). The laser line generator 30 is then deactivated (block 80) and the data (B-IMAGE) developed by imager 32 with no active illumination is acquired (block 82). The block 84 subtracts the ambient illumination data (i.e., the B-IMAGE) from the active illumination data (i.e., the A-IMAGE) to form a C-IMAGE that contains only reflected laser light energy, and the block 86 performs a thresholding operation on the C-IMAGE to suppress spurious data.

Finally, referring to FIG. 5, the subroutine for locating, identifying and calculating target vectors involves processing the acquired imager data to detect seat occupants (targets) and calculate the range to such occupants. As indicated by blocks 88, 90, 92 and 94, the subroutine scans through the C-IMAGE data developed by the subroutine of FIG. 4 until a pixel cluster representative of a target (such as seat 16 or a seat occupant) is identified. If no such pixel cluster is identified, the subroutine is exited. If a pixel cluster is found, the block 96 determines the center of the pixel cluster and the block 98 calculates the range to the determined center. The current scan angle and the calculated range form a target vector and block 66 of FIG. 3 stores the target vector in the target map as explained above.

In summary, the apparatus of the present invention provides a cost effective approach for thoroughly scanning the seating area of a vehicle passenger compartment for accurately determining if an occupant is present and classifying any detected occupant. The reported occupant status may additionally include an indication that the occupant is out-of-position - that is, seated improperly or too close to the inflatable restraint 20 or a different restraint such as a side-curtain airbag. Of course, other more detailed information about the occupant can also be determined and reported if desired.

While the present invention has been described with respect to the illustrated embodiment, it is recognized that numerous modifications and variations in addition to those mentioned herein will occur to those skilled in the art. In certain applications, for example, the scanning unit 12 for may require an additional laser line generator and scanning apparatus; in such case, DSP 34 can use the same imager 32 to acquire data from both scanners and consolidate the target vectors in a single target map. Accordingly, it is intended that the invention not be limited to the disclosed embodiment, but that it have the full scope permitted by the language of the following claims.

## Claims

1. Apparatus for sensing an occupant of a vehicle seat (16), comprising:
a laser line generator (30) for producing a line of infrared laser light (44);
a reflective element (38) positioned to receive the line of infrared laser light (44) produced by said laser generator (30) and to emit a line of infrared laser light that traverses a viewing region including said vehicle seat (16);
a solid state imaging device (32) for receiving infrared laser light reflected by an object in said viewing region;
scanning means (40) for incrementally moving said reflective element (38) to incrementally change a direction of the emitted line of infrared laser light so that the emitted line of infrared laser light sweeps across said viewing region; and
data processing means (34) responsive to video data produced by said imaging device (32) for creating a map of objects (66) in said viewing region and determining an occupancy status of said seat based on the mapped objects (72).

2. The apparatus of claim 1, wherein said map comprises a profile of said mapped objects, and said data processing means (34) determines that the occupancy status of said seat (16) is occupied when said profile corresponds to a stored occupant profile (72).

3. The apparatus of claim 1, wherein said data processing means (34) creates said map of objects by identifying objects in said viewing region (96) and determining a proximity of each identified object to said apparatus (98).

4. The apparatus of claim 3, wherein said map of objects comprises a 3-D profile of the identified objects, and said data processing means (34) classifies the identified objects based on said 3-D profile (72).

5. The apparatus of claim 1, wherein said viewing region includes a space between said seat (16) and an inflatable restraint (20) forward of said seat (16), and said data processing means (34) uses said map of objects to determine a proximity (72) of a detected object to said inflatable restraint (20).
